# FASCICULE DE BREVET EUROPEEN

(11) **EP 2 719 146 B1**
(45) Date de publication et mention de la délivrance du brevet: **17.02.2021**
(21) Numéro de dépôt: 12731111.6
(22) Date de dépôt: 05.06.2012
(51) Int. Cl.: H04L 29/06, H04W 12/06, G06F 21/42, G06Q 20/42, G07C 9/00

(54) **PROCÉDÉ DE SÉCURISATION D'UNE ACTION QU'UN DISPOSITIF ACTIONNEUR DOIT ACCOMPLIR À LA DEMANDE D'UN UTILISATEUR**
VERFAHREN ZUR SICHERUNG EINER VON EINER BETÄTIGUNGSVORRICHTUNG AUF ANFRAGE EINES BENUTZERS AUSZUFÜHRENDEN AKTION
METHOD FOR SECURING AN ACTION THAT AN ACTUATING DEVICE MUST CARRY OUT AT THE REQUEST OF A USER

(30) Priorité: 08.06.2011 FR 1155011
(43) Date de publication de la demande: 16.04.2014
(73) Titulaire: Augmented Security, 75008 Paris (FR)
(72) Inventeur: NICHOLSON, Alan Paul Marston, 92600 Asnieres (FR); TUIL, Charles, 92100 Boulogne sur Seine (FR)
(74) Mandataire: Berger, Helmut
(86) Numéro de dépôt international: PCT/FR2012/051247
(87) Numéro de publication internationale: WO 2012/168640

(56) Documents cités:
- EP-A1- 2 015 242
- WO-A1-01/52205
- US-A1- 2005 165 684

## Description

L'invention concerne un procédé de sécurisation d'une action qu'un dispositif actionneur doit accomplir à la demande d'un utilisateur, sous le contrôle d'un serveur de sécurisation, par l'intermédiaire d'un terminal portable tel qu'un téléphone portable de l'utilisateur, selon le préambule de la revendication 1.

Un procédé de ce type est déjà connu par le document WO 01/52205. Dans le cadre de ce procédé, les données confidentielles sont transmises au serveur de sécurisation par l'actionneur et pourraient donc être captées par des tiers malfaisants.

L'invention a pour but de pallier cet inconvénient.

Pour atteindre ce but, le procédé selon l'invention comporte les caractéristiques qui sont énoncées dans la partie caractérisante de la revendication 1.

D'autres caractéristiques de l'invention sont indiquées dans des revendications dépendantes.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant plusieurs modes de réalisation de l'invention et dans lesquels :
- la figure 1 est un schéma fonctionnel illustrant le processus d'établissement et de sécurisation du lien d'identification et d'authentification de l'utilisateur ;
- la figure 2 est un schéma fonctionnel illustrant le processus de vérification de l'authenticité d'un utilisateur au préalable de l'accomplissement d'une action par un dispositif actionneur, dans le domaine des transactions bancaires ;
- les figures 3 et 4 sont des schémas fonctionnels de deux autres applications de l'invention.

L'invention s'applique, de façon générale, à toutes les applications dans lesquelles un utilisateur demande à un dispositif actionneur d'accomplir une action à son profit, qui est sécurisé par un serveur de sécurisation.

On décrira ci-après, à titre d'exemples non limitatifs trois applications du procédé selon l'invention.

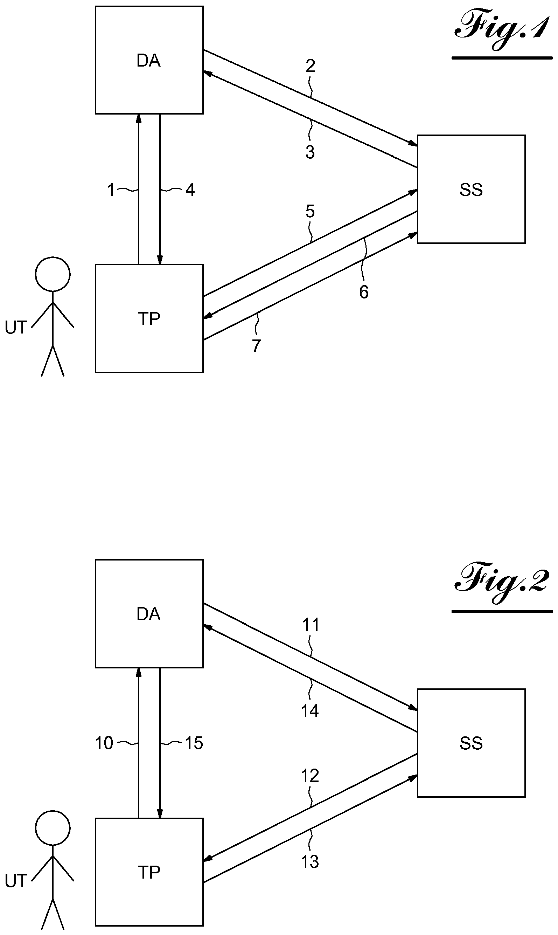

La figure 1 illustre la première phase du procédé selon l'invention, à savoir le processus d'inscription de l'utilisateur UT des services d'un dispositif actionneur DA, auprès d'un serveur de sécurisation SS, dans le domaine de transactions bancaires. Dans l'exemple représenté, le processus d'inscription est lancé par une demande de l'utilisateur UT, symbolisée par la ligne fléchée 1. Le dispositif actionneur DA, par exemple une agence de banque envoie en 2 au serveur de sécurisation SS les coordonnées bancaires de l'utilisateur, telles que les coordonnées de son compte bancaire ou de sa carte bancaire.

Suite à la réception de la demande d'inscription, le serveur de sécurisation renvoie en 3 par le canal agence un message OTP (one time password) au dispositif actionneur DA. Celui-ci transmet en 4 l'OTP à l'utilisateur UT, plus précisément à son terminal portable TP, par exemple un téléphone portable. L'utilisateur, de son côté, retourne en 5, à l'aide de son téléphone portable TP, au service de sécurisation, l'OTP dans un message SMS (short message service). Le serveur de sécurisation, en recevant le SMS, prend alors connaissance du numéro du téléphone portable de l'utilisateur et établit le lien entre les coordonnées bancaires identifiant l'utilisateur et le numéro du téléphone portable.

Puis le serveur de sécurisation s'adresse en 6 au téléphone portable et y télécharge un programme du type connu sous la dénomination Applet, qui contient un logiciel permettant l'accomplissement ultérieur du processus d'authentification de l'utilisateur et les données nécessaires à la mise en œuvre de ce processus. L'utilisateur crée ensuite un mot de passe qu'il envoie en 7 au service de sécurisation qui est alors en mesure d'inscrire, après le lien d'identification liant le téléphone portable aux données bancaires de l'utilisateur, un lien d'authentification qui lie, par le mot de passe, la personne de l'utilisateur aux données déjà inscrites auprès du service de sécurisation. Le processus d'inscription prend fin avec l'établissement du lien d'authentification.

L'établissement de ce lien vient d'être décrit, à titre d'exemple, dans l'application de l'invention au domaine bancaire, mais ce processus se déroule de façon similaire dans d'autres domaines d'application. Il s'agit toujours, après le téléchargement de l'Applet dans le téléphone portable, de l'envoi au moyen du téléphone portable par l'utilisateur d'un mot de passe que celui-ci a créé et qui n'est donc connu que de lui.

En se référant à la figure 2, on décrira ci-après la deuxième phase du procédé selon l'invention, à savoir le processus au cours duquel, toujours dans l'exemple du domaine bancaire, l'utilisateur demande à une agence bancaire d'effectuer une transaction bancaire. Par exemple l'utilisateur demande au dispositif actionneur DA un retrait d'espèces de 500 euros, ce qui nécessite l'accès à son compte bancaire. Cette étape initiale du processus est indiquée en 10 à la figure 2. Le dispositif DA envoie au serveur de sécurisation SS en 11 un message contenant les coordonnées bancaires de l'utilisateur et le motif, c'est-à-dire l'indication de l'opération dont l'accomplissement est demandé, à savoir le retrait d'un montant de 500 euros. Le serveur SS transmet à l'étape 13 suivant, au téléphone portable TP de l'utilisateur un message faisant apparaître sur l'écran de visualisation du téléphone le motif de la transaction demandée, c'est-à-dire le retrait d'un montant de 500 euros. Suite à la lecture du message, l'utilisateur répond au service de sécurisation par l'envoi de son mot de passe qu'il avait créé lors du processus d'inscription auprès du service de sécurisation. Cette étape d'envoi du mot de passe porte la référence 13.

Le serveur de sécurisation SS est donc en mesure d'authentifier l'utilisateur par comparaison du mot de passe qu'il vient de recevoir au mot de passe qu'il a mémorisé lors de la phase d'inscription et associée aux données bancaires et au numéro de téléphone portable. S'il y a concordance du mot de passe reçu et du mot de passe inscrit, le serveur, à l' étape 14 signale au dispositif actionneur, à savoir l'agence bancaire, son accord et ce dernier à l'étape 15 procède à délivrer le montant demandé à l'utilisateur.

Il ressort de la description qui vient d'être faite, que l'invention assure l'authentification de l'utilisateur, c'est-à-dire vérifie que la personne qui bénéficie de la transaction est bel et bien l'utilisateur autorisé, grâce au mot de passe seulement connu de celui-ci, puisque c'était lui qui l'avait créé.

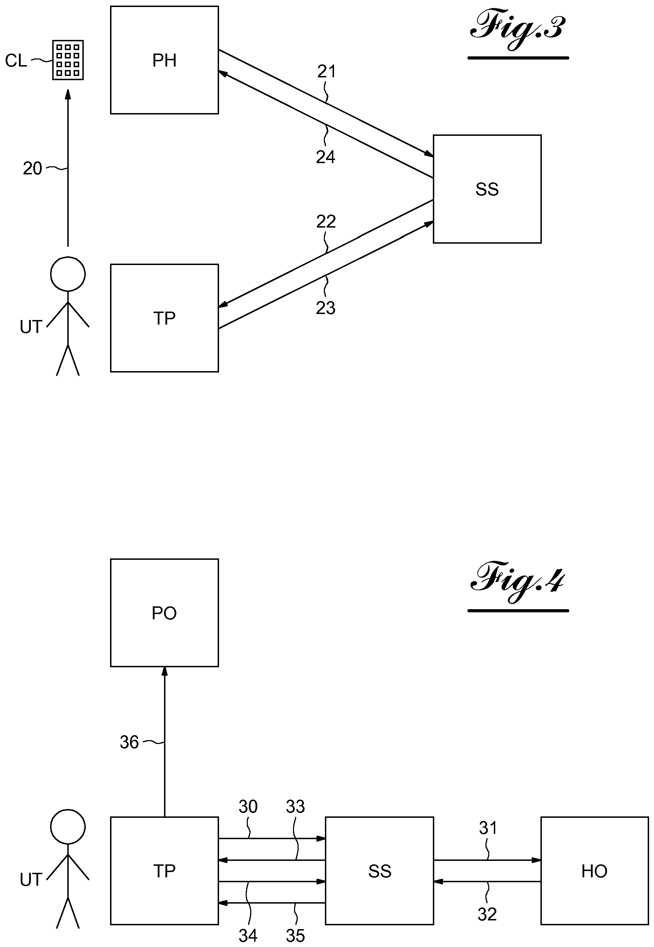

En se référant à la figure 3 on décrira une autre application du procédé selon l'invention, qui cependant se déroule selon les mêmes règles que l'application qui vient d'être exposée. Dans l'exemple de la figure 3, l'utilisateur demande l'ouverture de la porte PH d'une chambre d'hôtel qu'il a réservée. L'ouverture de la porte se fait de façon sécurisée sous l'égide d'un serveur de sécurité SS. Il est à noter que, lors du processus d'inscription, le serveur de sécurisation SS avait inscrit le lien entre un code d'identification de l'utilisateur, le numéro du téléphone portable et le mot de passe de celui-ci. Pour initier le processus d'ouverture de la porte, l'utilisateur tape alors sur le clavier CL de l'hôtel sans code d'identification à l'étape 20, ce qui entraîne l'envoi en 21 au service de sécurisation SS d'un message contenant le code d'identification et le motif, à savoir la demande d'ouverture de la porte. Conformément à l'exemple de la figure 2, le serveur SS renvoie en 22 au téléphone portable TP de l'utilisateur un message contenant le motif. Suite à la lecture de ce motif, l'utilisateur envoie en 23 son mot de passe. Après constatation de conformité de ce mot de passe reçu au mot de passe initialement inscrit, le serveur signale au dispositif actionneur DA en 24 son accord, ce qui provoque l'ouverture de la porte de la chambre d'hôtel conformément à la demande de l'utilisateur.

On constate que cette ouverture n'a lieu qu'après l'authentification de l'utilisateur, c'est-à-dire la constatation que c'est bien cet utilisateur qui est autorisé à demander l'ouverture de la porte.

La figure 4 illustre un autre exemple de mise en œuvre du procédé selon l'invention dans l'application hôtelière. Dans ce cas le téléphone portable TP est programmé pour envoyer directement une demande d'ouverture de la porte de la chambre que l'utilisateur a réservée, au serveur de sécurisation SS à l'étape 30. Suite à la réception de la demande, ce serveur s'adresse en 31 à l'hôtel HO pour que celui-ci confirme la réservation de l'utilisateur. A l'étape 33 le serveur SS envoie au téléphone portable TP le message contenant le motif de la demande qui s'affiche alors sur l'écran du téléphone, suite à quoi l'utilisateur envoie en 34 son mot de passe au serveur. Après la constatation de la conformité du mot de passe reçu au mot de passe initialement inscrit, le serveur envoie en 35 à l'utilisateur un code temporaire qui permet à l'utilisateur de commander en 36 l'ouverture de la porte par exemple par l'intermédiaire de son téléphone qui est alors pourvu de moyens émetteurs, par voie hertzienne ou toute autre manière appropriée, un signal au mécanisme de la porte équipée alors d'une antenne de réception, ce qui provoque l'ouverture de la porte.

Comme il ressort de la description de l'invention, qui précède, le dialogue d'authentification de l'utilisateur a lieu entre celui-ci et le serveur de sécurisation, ce qui constitue un avantage considérable du procédé de sécurisation proposé par l'invention. En effet, les données confidentielles sont, dès leur saisie par l'utilisateur sur le terminal portable, directement transmises par celui-ci au serveur de sécurisation, sans transiter par des voies qui pourraient permettre à des tiers de capter les informations confidentielles. Ainsi, l'invention garantit la confidentialité des données à l'égard de tiers malveillants.

Etant donné que lors du dialogue d'identification, l'utilisateur saisit des données confidentielles sur son propre terminal portable, l'invention est donc utilisable pour tout type de dispositif actionneur, y compris des dispositifs actionneurs ne permettant pas la saisie de telles informations.

Pour augmenter encore le niveau de sécurité du système d'authentification, la liaison de communication entre le terminal portable de l'utilisateur et le serveur de sécurisation pourrait être cryptée afin d'interdire tout détournement des données confidentielles lors de leur transit sur le réseau de communication.

Pour permettre un niveau de sécurité encore plus élevé, le cryptage pourrait être dynamique, liant les phases dialogue entre elles, afin d'empêcher la réintroduction dans le réseau d'échanges antérieurs en vue de tromper le serveur de sécurité.

## Revendications

1. Procédé de sécurisation d'une action qu'un dispositif actionneur (DA) doit accomplir à la demande d'un utilisateur (UT), sous le contrôle d'un serveur de sécurisation (SS), par l'intermédiaire d'un terminal portable (TP) tel qu'un téléphone portable de l'utilisateur, comportant une phase d'établissement et d'inscription auprès du serveur de sécurisation (SS), au préalable de toute demande d'une action par l'utilisateur, d'un lien d'identification et d'un lien d'authentification de l'utilisateur, qui implique la communication au serveur de sécurisation (SS) des données d'identification et de données confidentielles de l'utilisateur comportant le numéro du terminal portable (TP) et un mot de passe,
**caractérisé en ce que**, pour ladite inscription, suite à une requête (1) de l'utilisateur à l'actionneur (DA), celui-ci envoie (2) au serveur de sécurité (SS) les données d'identification de l'utilisateur, le serveur (SS) renvoie (3) un message d'inscription OTP à l'actionneur qui le transmet (4) à le téléphone portable (TP) qui, de son côté, retourne (5) au serveur (SS) le message d'inscription OTP dans un message SMS duquel le serveur (SS) apprend le numéro du téléphone portable, et qu'ensuite le serveur (SS) adresse (6) au téléphone portable un programme permettant l'accomplissement du processus d'authentification de l'utilisateur qui crée alors le mot de passe qu'il envoie (7) au serveur, et **en ce que** celui-ci, après la création du lien d'identification liant le téléphone portable aux données d'identification de l'utilisateur, établit aussi un lien d'authentification qui lie, par le mot de passe, l'utilisateur aux données déjà inscrites.

2. Procédé selon la revendication 1, **caractérisé en ce que** la vérification de l'identité et de l'authenticité du demandeur, lorsque celui-ci demande au dispositif actionneur d'accomplir une action, se déroulent sous forme d'un dialogue entre le serveur de sécurisation, le dispositif actionneur et l'utilisateur agissant par l'intermédiaire de son terminal portable.

3. Procédé selon la revendication 2, **caractérisé en ce que**, pour permettre le dialogue d'identification et authentification de l'utilisateur, lors d'une demande d'une action, le serveur de sécurisation télécharge dans le terminal portable de l'utilisateur, lors de l'inscription et d'authentification, le programme de type Applet qui comporte le logiciel et les données nécessaires au dialogue d'identification et d'authentification de l'utilisateur.

4. Procédé selon l'une des revendications 2 ou 3, **caractérisé en ce que** le dialogue d'identification et d'authentification de l'utilisateur lors d'une demande par celui-ci d'une action de la part du dispositif actionneur, implique l'envoi par le dispositif actionneur au serveur de sécurisation des données d'identification de l'utilisateur et l'indication de la nature de la demande, l'envoi par le serveur sur le terminal portable de l'utilisateur des données d'indication de la nature de l'action demandée, et la transmission par l'utilisateur, par l'intermédiaire de son terminal portable, des données confidentielles d'authentification au serveur de sécurisation qui autorise le dispositif actionneur d'accomplir l'action demandée s'il a constaté la conformité des données confidentielles reçues aux données confidentielles inscrites.

## Patentansprüche

1. Verfahren zur Sicherung einer Handlung, die eine Betätigungsvorrichtung (DA) auf Aufforderung eines Benutzers (UT) unter der Steuerung eines Sicherungsservers (SS) über ein tragbares Endgerät (TP) wie z.B ein Mobiltelefon des Benutzers ausführen muss, umfassend Herstellen einer Erkennungsverbindung des Benutzers und Eintragen der Erkennungsverbindung beim Sicherungsserver (SS) im Vorfeld einer Handlungsaufforderung durch den Benutzer, was beinhaltet, dass dem Sicherungsserver (SS) Identifizierungsdaten und vertrauliche Daten des Benutzers, umfassend die Nummer des tragbaren Endgeräts (TP) und ein Passwort, mitgeteilt werden,
**dadurch gekennzeichnet, dass** zur Ausführung der Eintragung im Anschluss an eine Aufforderung (1) des Benutzers an die Betätigungsvorrichtung (DA) dieser dem Sicherungsserver (SS) die Identifizierungsdaten des Benutzers sendet (2), der Server (SS) eine OTP-Eintragungsmeldung an die Betätigungsvorrichtung zurücksendet (3), die sie an das Mobiltelefon (TP) sendet (4), das seinerseits dem Server (SS) die OTP-Eintragungsmeldung in einer SMS-Nachricht zurücksendet (5), der der Server (SS) die Nummer des Mobiltelefons entnimmt, und dass der Server (SS) dem Mobiltelefon dann ein Programm sendet (6), das die Durchführung des Verfahrens zum Authentifizieren des Benutzers ermöglicht, der dann das Passwort erstellt, das er an den Server (7) sendet,
und dass dieser nach der Herstellung der Identifizierungsverbindung, die das Mobiltelefon mit den Identifizierungsdaten des Benutzers verknüpft, ferner eine Authentifizierungsverbindung herstellt, die den Benutzer über das Passwort mit den bereits eingetragenen Daten verknüpft.

2. Verfahren nach Anspruch 1, **dadurch gekennzeichnet, dass** die Verifizierung der Identität und der Authentizität des Anforderers, wenn dieser die Betätigungsvorrichtung zur einer Handlung auffordert, in Form eines Dialogs zwischen dem Sicherungsserver, der Betätigungsvorrichtung und dem Benutzer, der über sein tragbares Endgerät mitwirkt, stattfindet.

3. Verfahren nach Anspruch 2, **dadurch gekennzeichnet, dass**, um bei einer Handlungssaufforderung den Dialog zur Identifizierung und Authentifizierung des Benutzers zu ermöglichen, der Sicherungsserver während der Eintragung und Authentifizierung auf das tragbare Endgerät des Benutzers das Applet-Programm ladet, das die für den Dialog zur Identifizierung und Authentifizierung des Benutzers erforderlichen Software und Daten umfasst.

4. Verfahren nach einem der Ansprüche 2 oder 3,
**dadurch gekennzeichnet, dass** der Dialog zur Identifizierung und Authentifizierung des Benutzers bei einer an die Betätigungsvorrichtung gerichteten Handlungsauffordung des Benutzers beinhaltet: Senden von Identifizierungsdaten des Benutzers sowie Angaben über die Art der Aufforderung von der Betätigungsvorrichtung an den Sicherungsserver, Senden von Angaben über die Art der angeforderten Handlung vom Server an das tragbare Endgerät des Benutzers und Senden von vertraulichen Identifizierungsdaten vom Benutzer über dessen tragbare Endgerät an den Sicherungsserver, der der Betätigungsvorrichtung die Vornahme der angeforderten Handlung erlaubt, wenn er festgestellt hat, dass die empfangenen vertraulichen Daten mit den eingetragenen vertraulichen Daten übereinstimmen.

## Claims

1. A method for securing an action that an actuating device (DA) must carry out at the request of a user (UT), under the control of the securing server (SS), by means of a portable terminal (TP) such as a mobile telephone of the user, including an establishment and registration phase with the securing server (SS), before any request for an action by the user, of an identification link and an authentication link of the user, which involves the communication to the securing server (SS) of the identification data and confidential data of the user including the number of the portable terminal (TP) and password, **characterized in that**, for said registration, following a request (1) from the user to the actuator (DA), the latter sends (2) the security server (SS) the identification data of the user, the server (SS) returns (3) a registration message OTP to the actuator, which sends (4) it to the mobile telephone (TP), which, in turn, returns (5) the registration message OTP to the server (SS) in an SMS message from which the server (SS) learns the number of the mobile telephone, and next the server (SS) sends (6) the mobile telephone a program allowing the performance of the process for authenticating the user, which then creates the password that it sends (7) to the server, and **in that** the latter, after creating the identification link linking the mobile telephone to the identification data of the user, also establishes an authentication link that uses the password to link the user to the data already registered.

2. The method according to claim 1, **characterized in that** the verification of the identity and authenticity of the requester, when the latter requests that the actuating device perform an action, take place in the form of a dialogue between the securing server, the actuating device and the user acting through his mobile terminal.

3. The method according to claim 2, **characterized in that**, to allow the identification and authentication dialogue of the user, during a request for an action, the securing server downloads, in the mobile terminal of the user, during the registration and authentication, the Applet-type program that includes the software and the data necessary for the identification and authentication dialogue of the user.

4. The method according to one of claims 2 or 3, **characterized in that** the identification and authentication dialogue of the user during a request by the latter for an action by the actuating device, involves the sending by the actuating device to the securing server of the identification data of the user and the indication of the nature of the request, the sending by the server to the mobile terminal of the user of the data indicating the nature of the requested action, and the sending by the user, by means of his mobile terminal, of the confidential authentication data to the securing server, which authorizes the actuating device to perform the requested action if it has observed the conformity of the received confidential data with the registered confidential data.
